# EUROPÄISCHE PATENTSCHRIFT

(11) **EP 2 348 336 B1**
(45) Veröffentlichungstag und Bekanntmachung des Hinweises auf die Patenterteilung: **01.06.2016**
(21) Anmeldenummer: 10000748.3
(22) Anmeldetag: 26.01.2010
(51) Int. Cl.: G01V 3/00

(54) **Verfahren zum Wiederauffinden von bereits ermittelten unterirdischen Objekten**
Method for retrieving previously detected subterranean objects
Procédé d'extraction d'objets souterrains déjà détectés

(43) Veröffentlichungstag der Anmeldung: 27.07.2011
(73) Patentinhaber: Vallon GmbH, 72800 Eningen (DE)
(72) Erfinder: Kühner, Jens, 72762 Reutlingen (DE)
(74) Vertreter: Klocke, Peter

(56) Entgegenhaltungen:
- WO-A1-93/05474
- US-A- 5 146 231
- US-A- 5 266 958
- US-A1- 2005 156 776
- US-A1- 2007 168 126

## Beschreibung

Die vorliegende Erfindung betrifft ein Verfahren zum Auffinden von unterirdischen Objekten, die bereits mittels geeigneten Suchgeräten aufgespürt und zumindest geografischer Lage mittels einer Auswerteeinrichtung ausgewertet wurden.

Zur Beseitigung von unterirdischen Objekten, unter denen im Folgenden Kampfmittel, explosive Stoffe, Minen, Bomben und dergleichen verstanden werden, ist es bekannt, dass diese mittels Suchgeräten in der Regel in einem vorgegebenen Bereich detektiert werden. Die dabei erhaltenen Daten über den Ort des Fundes und die mögliche Art des Objektes werden gespeichert und können mit einer entsprechenden Software auf einem Computer ausgewertet werden. Die Software ermöglicht die Darstellung des abgesuchten Feldes mit den ermittelten Objekten, der geografischen Lage und möglicherweise auch der Tiefe. Um nun einzelne gefundene Objekte wieder aufsuchen zu können, ist es bekannt, die ausgewerteten Daten mit der geografischen Lage auszudrucken, einen Referenzpunkt festzulegen und ausgehend von diesem mittels Maßband die Stelle auszumessen, an der das gewünschte Objekt geortet wurde. Eine andere Möglichkeit besteht darin, ein Lokalisierungsgerät zu verwenden, das auf ein lokales oder auch globales Positionierungssystem zurückgreift (z. B. GPS oder Galileo), um mittels diesem Gerät den Ort des Fundes aufgrund der geografischen Koordinaten aufzusuchen.

Zum Stand der Technik wird für Lokalisierungsgeräte bzw. Navigationsgeräte auf die Druckschriften US 2005/0156776 A1, US 5,146,231 A und WO93/05474 A1 verwiesen.

Die Offenlegungsschrift US 20050156776 A1 offenbart ein Verfahren zum Auffinden von unterirdischen Objekten, insbesondere von metallischen und nichtmetallischen Leitungen mittels eines Detektors, der ein Bodenradar zum Auffinden und zum Verfolgen der Leitungen und ein GPS-Modul zur Dokumentation der Position bzw. des Verlaufes aufweist. Der Detektor kann den Ort, die Tiefe und die räumliche Erstreckung der Leitungen ermitteln und mit den GPS-Daten verknüpft in einem integrierten Speicher ablegen. Der als Handgerät ausgeführte Detektor weist dazu einen Mikroprozessor auf, der den Verlauf der Leitungen auf einem vorgesehenen Display bildlich darstellt. Die Daten von aufgespürten Leitungen können bei Bedarf dauerhaft in dem Speicher verbleiben und sind somit jederzeit aufrufbar. Zusätzlich zu den Leitungen wird auf dem Display die jeweilige augenblickliche Position des Detektors bezüglich der Leitung dargestellt.

Die Patentschrift US 5,146,231 A offenbart ein GPS-gestütztes Navigationsgerät in Form eines elektronischen Kompasses. In einem Speicher des Kompasses können eine Anzahl von Zielorten mit ihren GPS-Daten eingespeichert werden. Nach der Auswahl eines beliebigen Zielortes aus einer auf einem Bildschirm des Gerätes angezeigten Zielortübersicht zeigt der Kompass nach der Ausrichtung in Richtung eines beliebigen Satelliten des GPS-Systems, die Nordrichtung und die Richtung zum Zielort über Richtungspfeile an sowie die aktuelle Entfernung zu dem gewählten Ort. Dabei wird die exakte Ausrichtung einer Hauptachse des elektronischen Kompasses in Richtung des Satelliten von dem Gerät selbstständig erkannt und dem Benutzer signalisiert.

Die Druckschrift D3 offenbart ein Navigationsgerät zur Bestimmung der Bewegungsrichtung, das über voneinander getrennte Anzeigeelemente meldet, wenn die Längsachse des Navigationsgerätes in eine vorbestimmte Richtung vorzugsweise zu einem Zielpunkt weist. Dies wird ermöglicht durch einen Funknavigationsempfänger, insbesondere einem GPS-Empfänger in Verbindung mit einem Erdinduktionskompass, die in dem als Handgerät ausgeführten Navigationsgerät eingebaut zusammenwirken. Das Handgerät weist ein Benutzerinterface auf, das eine Eingabetastatur, eine Richtungsanzeige und ein konfigurierbares Display aufweist. Das Navigationsgerät besitzt außerdem einen Gerätespeicher, in dem die Koordinaten von Zielpunkten gespeichert werden können, die über die Eingabetastatur oder eine beliebige andere elektronische Schnittstelle dem Speicher zugeführt werden.

Der vorliegenden Erfindung liegt die Aufgabe zu Grunde, eine Möglichkeit vorzuschlagen, mit der das erneute Auffinden derartiger unterirdischer Objekte vereinfacht wird.

Diese Aufgabe wird erfindungsgemäß durch ein Verfahren mit den Merkmalen des Hauptanspruchs gelöst. Weitere vorteilhafte Ausgestaltungen sind den Unteransprüchen zu entnehmen.

Gemäß der Erfindung werden die durch die Auswerteeinrichtung ausgewerteten Daten direkt dazu verwendet, um den Benutzer mittels eines mit einem Lokalisierungssystem versehenen mobilen Geräts mit Bildschirm zu dem gewünschten Zielobjektort zu führen. Dabei kann entweder das Handgerät bereits die Auswerteeinrichtung zum Auswerten der mittels den Suchgeräten ermittelten Daten enthalten oder die Daten von einer getrennten Auswerteeinrichtung empfangen.

Da üblicherweise in einem vorgegebenen abgesuchten Gebiet eine Vielzahl von Objekten gefunden werden, werden diese in Form einer Liste in einer ersten Darstellung auf dem Bildschirm angezeigt. Nach der Auswahl eines Objektes aus dieser Liste (Zielobjekt) wird in einer zweiten Darstellung auf dem Bildschirm eine Soll-Bewegungsrichtung zum Erreichen des Zielobjektes, dessen geographische Lage den Zielobjektort bildet, ausgehend von der Ist-Position angezeigt. Die Darstellung erfolgt vorzugsweise mittels Symbolen, insbesondere einem Pfeil. Sobald der Benutzer sich in Bewegung gesetzt hat, wird zusätzlich zu der Soll-Bewegungsrichtung auch die Ist-Bewegungsrichtung des Benutzers angezeigt.

Nach der Annäherung an das Zielobjekt bis auf eine vorgegebene Entfernung wird in einer dritten Darstellung auf dem Bildschirm der Zielobjektort, de Ist-Position und die Entfernung zwischen der Ist-Position und dem Zielobjektort anhand von Entfernungsmarkierungen angezeigt. Diese dritte Darstellung schaltet sich automatisch dann ein, wenn der Benutzer nur noch wenige Schritte von dem Zielobjekt entfernt ist. Dies geschieht im Bereich von 5 bis 8 m Entfernung zu dem Zielobjekt. In diesem Bereich wird der Benutzerzwangsläufig langsamer gehen müssen, um das Zielobjekt genau zu treffen. Eine Richtungsangabe auf Grund der in dieser Entfernung langsameren Bewegung des Mobilgeräts ist auf Grund der geringeren Geschwindigkeit nicht mehr möglich, da der Abstand zwischen den Messpunkten für die Richtungsbestimmung kleiner ist als die Genauigkeit eines globalen Positionierungssystems. Bei der Verwendung eines lokalen Positionierungssystems könnte auch hier noch eine Soll-Bewegungsrichtung angezeigt werden. Dabei sind die Entfernungsmarkierungen als konzentrische Ringe um den Zielobjektort dargestellt, so dass sich das Bild einer Zielscheibe ergibt. Die Ist-Position kann beispielsweise mittels eines Kreuzes dargestellt werden, so dass der Benutzer sofort erkennt, dass er das gesuchte Zielobjekt gefunden hat, wenn sich das Kreuz im Zentrum der Ringe, das den Zielobjektort symbolisiert, befindet. Zusätzlich kann eine optische oder auch akustische Ausgabe mit einem entsprechenden Hinweis erfolgen.

Bei dem erfindungsgemäßen Verfahren wird nach der Auswahl des Zielobjekts die Ist-Position des Benutzers mittels des Lokalisierungssystems bestimmt, die Richtung von der Ist-Position zum Zielobjektort ermittelt und in der zweiten Darstellung als Soll-Bewegungsrichtung, beispielsweise anhand einer Kompassgrafik angezeigt, wobei dieser Vorgang so lange wiederholt wird, bis auf Grund der Bewegung des Mobilgeräts die Ist-Position sich verändert hat. Dann wird aus der aktuellen Ist-Position und der letzten bekannten Ist-Position die Ist-Bewegungsrichtung ermittelt, also die Laufrichtung, und aus der Ist-Position und dem Zielobjektort die Soll-Bewegungsrichtung ermittelt.

Dieser Vorgang wird so lange wiederholt, bis die Ist-Position sich in einem vorgegebenen nahen Umkreis zum Zielobjektort befindet.

Dann wird wie vorstehend beschrieben, die Ist-Position und der Zielobjektort in einer Zielscheibendarstellung angezeigt, wobei der Zielobjektort im Mittelpunkt und die Ist-Position mittels eines Symbols in der Zielscheibe angezeigt wird. Dieser Vorgang wiederholt sich so lange, bis die Ist-Position mit dem Zielobjektort übereinstimmt.

Vorzugsweise werden die Ist- und die Sollbewegungsrichtung auf dem Bildschirm relativ zueinander vorzugsweise mittels Pfeilen dargestellt, wobei die unterschiedlichen Richtungen durch unterschiedliche Pfeile entweder in der Länge oder in der Dicke symbolisiert werden.

Gemäß einer weiteren bevorzugten Ausbildung wird die genaue Entfernung zwischen Ist-Position und dem Zielobjektort an einem Bildschirmrand, vorzugsweise unterhalb oder oberhalb einer der Darstellungen schriftbildlich angezeigt, so dass der Benutzer immer über den noch zurückzulegenden Weg informiert ist.

Mit dem erfindungsgemäßen Verfahren ist es somit möglich, den Benutzer beim Wiederauffinden von bereits ermittelten Objekten auf dem schnellsten Wege zu dem gesuchten Zielobjekt zu führen.

Weitere Merkmale der Erfindung ergeben sich aus der folgenden Beschreibung eines Ausführungsbeispiels in Verbindung mit den Ansprüchen und den Abbildungen. Die einzelnen Merkmale können je für sich oder zu mehreren bei Ausführungsformen der Erfindung verwirklicht sein. Es stellen dar:
- Figur 1: ein Handgerät mit der ersten Darstellung;
- Figur 2: das Handgerät mit einer zweiten Darstellung;
- Figur 3: das Handgerät mit einer dritten Darstellung; und
- Figur 4: ein Ablaufdiagramm für das Verfahren.

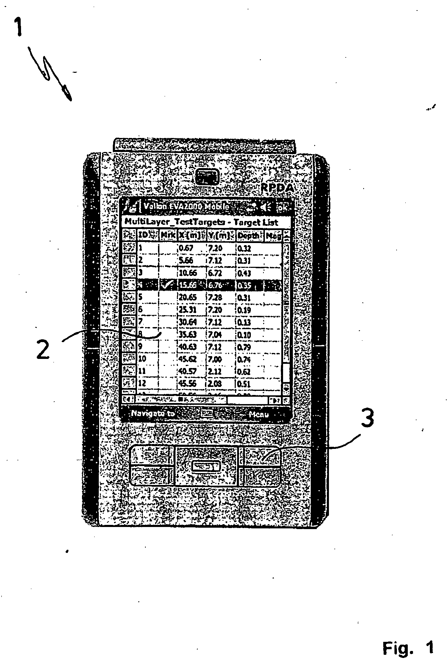

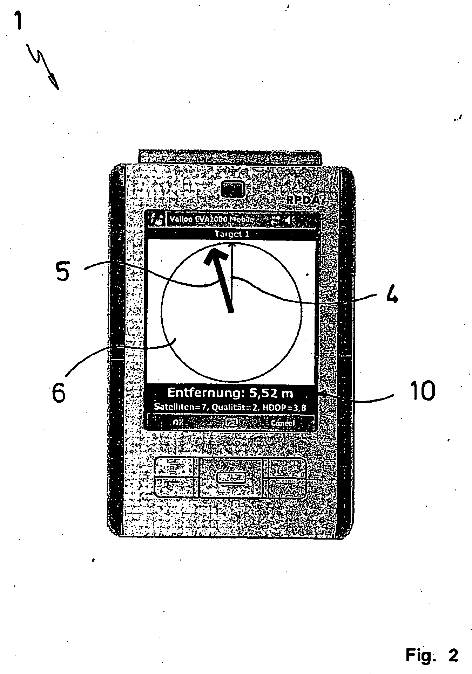

Figur 1 zeigt das Mobilgerät, beilspielsweise in Form eines persönlichen digitalen Assistenten (PDA) 1 mit einem Bildschirm 2 und Eingabetasten 3. Das Handgerät 1 enthält entweder integriert einen Empfänger für Positionsdaten oder ein solcher ist an dieses Gerät anschließbar. Figur 1 zeigt die erste Darstellung mit einer Liste von Objekten mit den Koordinaten für ihre Position. Mittels der Eingabetasten 3 kann das gewünschte wieder aufzufindende Objekt ausgewählt werden. Nach der Auswahl schaltet der in dem Handgerät 1 enthaltene Prozessor auf eine Darstellung gemäß Figur 2 um.

Figur 2 zeigt die ermittelte Soll-Bewegungsrichtung mittels eines dünnen Pfeils 4 und auf Grund der Bewegung des Mobilgeräts 1 die Laufrichtung als Ist-Bewegungsrichtung mit einem dickeren Pfeil 5 in einem Ring 6. Unterhalb dieser symbolischen Darstellung wird die Entfernung vom Ist-Position zum Zielobjektort schriftbildlich dargestellt.

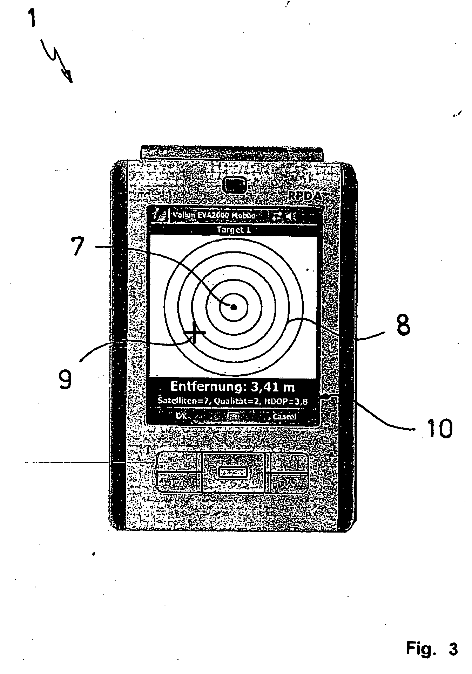

Figur 3 zeigt den Bildschirm 2 mit der dritten Darstellung, da das Handgerät 2 sich nun in einem vorgegebenen Näherungsbereich zu dem Zielobjektort, der in der Mitte 7 der konzentrischen Ringe 8 dargestellt ist. In dem Ausführungsbeispiel stellt jeder Ring einen Abstand von ca. 1 m dar. Die augenblickliche Ist-Position wird durch ein Kreuz 9 symbolisiert. Der Benutzer hat den Zielobjektort 7 erreicht, wenn das Kreuz 9 sich im Zentrum der konzentrischen Ringe 8 befindet. Dann kann eine optische und akustische zusätzliche Signalausgabe erfolgen. Mit der Bezugsziffer 10 ist in den Figuren das Ausgabefeld für die Entfernung auf dem Bildschirm dargestellt.

Die Pfeildarstellungen sind so gewählt, dass ein dünner Pfeil die Ist-Bewegungsrichtung und ein dicker Pfeil die Soll-Bewegungsrichtung darstellt. Der Benutzer muss sich so bewegen, dass die beiden Pfeile deckungsgleich und in die gleiche Richtung zeigen. Bei der Darstellung gemäß Figur 3 wird mit dem Kreuz 9 die Ist-Position und mit dem Zentrum 7 der Zielobjektort angezeigt. Gemäß der Darstellung in Figur 3 erkennt der Benutzer, dass er sich schräg nach rechts bewegen muss.

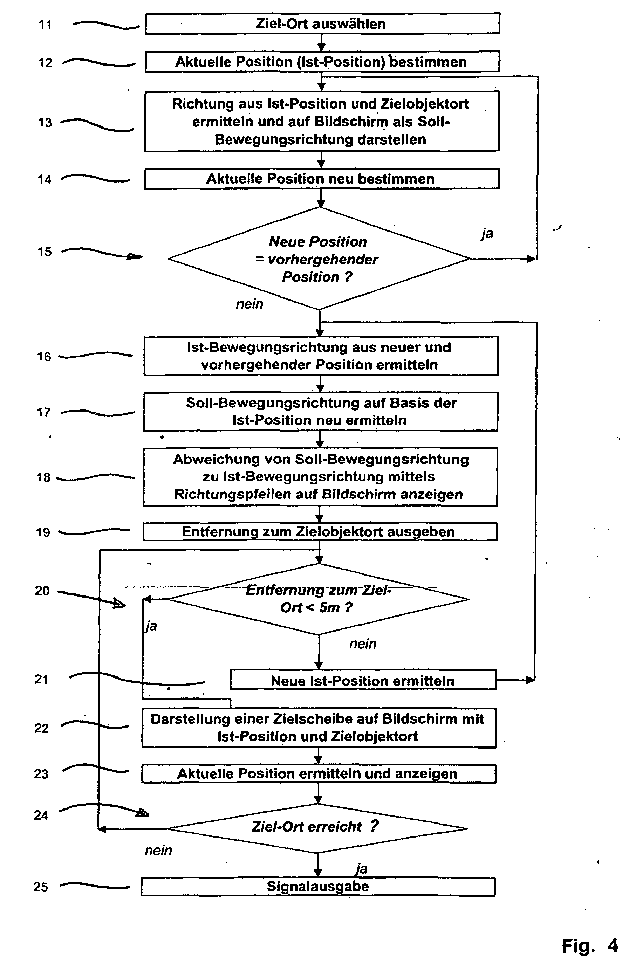

In dem Blockschaltbild gemäß Figur 4 symbolisiert Block 11 die Auswahl des Zielobjektortes auf dem Bildschirm 2 durch Betätigung der Eingabetasten 3. Nach der Auswahl muss gemäß Block 12 die aktuelle Position bestimmt werden, indem die von einem Georeferenzempfänger gelieferten Daten verwendet werden. Als nächster Schritt wird gemäß Block 13 die neue Richtung aus der aktuellen Ist-Position und dem Zielobjektort ermittelt und auf dem Bildschirm 2 als Soll-Bewegungsrichtung dargestellt. Anschließend wird gemäß Block 14 die aktuelle Position neu bestimmt und in Block 15 abgefragt, ob die neue Position mit der vorhergehenden Position übereinstimmt. Sollte dies der Fall sein, erfolgt ein Rücksprung zu Block 13 so lange, bis die neue Position von der vorhergehenden Position abweicht.

Dann wird gemäß Block 16 die Ist-Bewegungsrichtung aus der neuen und vorhergehenden Position (alte Ist-Position und neue Ist-Position) ermittelt und gemäß dem darauf folgenden Block 17 die Soll-Bewegungsrichtung auf der Basis der neuen Ist-Position ermittelt. Die Abweichung wird gemäß Block 18 als Pfeile 4, 5 auf dem Bildschirm 2 dargestellt. Zusätzlich wird gemäß Block 19 die Entfernung zum Zielobjektort in einem zusätzlichen Feld 10 ausgegeben. So lange gemäß Block 21 die Entfernung vom Zielobjektort größer als 5 m ist, wird gemäß Block 20 eine neue Ist-Position ermittelt und die Vorgänge gemäß der Blöcke 16 bis 19 erneut durchgeführt. Ist die Entfernung kleiner als 5 m zum Zielobjektort, erfolgt gemäß Block 22 die Darstellung gemäß Figur 3 mit einer Zielscheibe auf dem Bildschirm 2 mit einer Ist-Position als Kreuz 9 und dem Zielobjektort 7 im Zentrum konzentrischer Ringe 8. Gemäß Block 23 wird die neue Ist-Position ermittelt und angezeigt. Gemäß Block 24 werden die Blöcke 21 bis 24 so lange durchlaufen, bis der Zielobjektort erreicht und gemäß Block 25 ein Signal ausgegeben werden kann.

## Patentansprüche

1. Verfahren zum Auffinden von unterirdischen Objekten, die bereits mittels geeigneten Suchgeräten aufgespürt und zumindest bezüglich geografischer Lage mittels einer Auswerteeinrichtung dokumentiert wurden, **dadurch gekennzeichnet, dass**
die Daten der Auswertung durch die Auswerteeinrichtung in einem mit einem Lokalisierungssystem versehenen Handgerät (1) mit Bildschirm (2) gespeichert werden, wobei die Auswertung in einer von dem Handgerät (1) getrennten Auswerteeinrichtung oder in dem Handgerät (1) vorgenommen werden,
in einer ersten Darstellung auf dem Bildschirm (2) eine Liste der möglichen Objekte angezeigt wird,
nach Auswahl eines Zielobjektes in einer zweiten Darstellung auf dem Bildschirm (2) ausgehend von einer Ist-Position eine Soll-Bewegungsrichtung (5) zu dem der geografischen Lage des Zielobjekts entsprechenden Zielobjektort und nach einer Bewegung des Handgeräts (1) zusätzlich die Ist-Bewegungsrichtung (4) angezeigt werden, und
in einer dritten Darstellung auf dem Bildschirm (2) nach Erreichen einer vorgegebenen Entfernung zum Zielobjektort der Zielobjektort (7), die Ist-Position (9) und Entfernungsmarkierungen (8) zwischen der Ist-Position und dem Zielobjektort angezeigt werden;
wobei in den Darstellungen Symbole (4 bis 9) angezeigt werden;
die Entfernungsmarkierungen als konzentrische Ringe (8) um den Zielobjektort (7) angezeigt werden;
nach der Auswahl des Zielobjekts die Ist-Position mittels des Lokalisierungssystems bestimmt, die Richtung von der Ist-Position zum Zielobjektort ermittelt und in der zweiten Darstellung als Soll-Bewegungsrichtung angezeigt wird, wobei diese Vorgänge so lange wiederholt werden, bis auf Grund der Bewegung des Benutzers mit dem Handgerät (1) die Ist-Position sich verändert hat;
aus der aktuellen Ist-Position und der vorangegangenen Ist-Position die Ist-Bewegungsrichtung ermittelt wird,
aus der Ist-Position und dem Zielobjektort die Soll-Bewegungsrichtung ermittelt wird,
auf dem Bildschirm die Ist-Bewegungsrichtung und die Soll-Bewegungsrichtung relativ zueinander angezeigt werden, wobei der Vorgang sich so lange wiederholt, bis die Ist-Position in einem vorgegebenen nahen Umkreis zum Zielobjektort sich befindet; und
in der dritten Darstellung die Ist-Position und der Zielobjektort in Form einer Zielscheibe angezeigt werden, wobei der Zielobjektort im Mittelpunkt abgebildet und die Ist-Position mittels eines Symbols in der Zielscheibe angezeigt wird, wobei der Vorgang so lange wiederholt wird, bis die Ist-Position mit dem Zielobjektort übereinstimmt.

2. Verfahren nach Anspruch 1, **dadurch gekennzeichnet, dass** die Soll-Bewegungsrichtung und die Ist-Bewegungsrichtung als Pfeile (4, 5) mit unterschiedlicher Dicke angezeigt werden.

3. Verfahren nach Anspruch 1 oder 2, **dadurch gekennzeichnet, dass** die genaue Entfernung zwischen Ist-Position und Zielobjektort an einem Bildschirmrand, vorzugsweise unterhalb oder oberhalb einer der Dar stellungen, schriftbildlich angezeigt wird.

4. Verfahren nach Anspruch 1 **dadurch gekennzeichnet, dass** die Entfernung vom Zielobjektort angezeigt wird.

5. Verfahren nach Anspruch 1, **dadurch gekennzeichnet, dass** bei Übereinstimmung von Ist-Position und Zielobjektort eine optische und/oder akustische Ausgabe erfolgt.

## Claims

1. A method of locating subterranean objects which were previously detected by means of suitable detectors and documented at least as regards geographical position by means of an evaluation system, **characterised in that**
the data of the evaluation by the evaluation system is stored in a hand-held device (1), provided with a localisation system and with a screen (2), wherein the evaluation is effected in an evaluation system separate from the hand-held device (1) or in the hand-held device (1),
a list of the possible objects is indicated in a first display on the screen (2), after selection of a target object, starting from an actual position, a desired direction of movement (5) to the target object location corresponding to the geographical position of the target object and, after a movement of the hand-held device (1), additionally the actual direction of movement (4) are indicated in a second display on the screen (2), and
after reaching a predetermined distance from the target object location, the target object location (7), the actual position (9) and distance markings (8) between the actual position and the target object location are indicated in a third display on the screen (2);
wherein symbols (4 to 9) are shown in the displays;
the distance markings are shown as concentric rings (8) around the target object location (7);
after the selection of the target object the actual position is determined by means of the localisation system, the direction from the actual position to the target object location is determined and is indicated in the second display as a desired direction of movement, wherein these processes are repeated until the actual position has altered by reason of the movement of the user with the hand-held device (1);
the actual direction of movement is determined from the current actual position and the preceding actual position,
the desired direction of movement is determined from the actual position and the target object location,
the actual direction of movement and the desired direction of movement are indicated relative to one another on the screen, wherein the process is repeated until the actual position is located in a predetermined area close to the target object location; and
the actual position and the target object location are indicated in the third display in the form of a target circle, wherein the target object location is represented at the centre point and the actual position is indicated by means of a symbol in the target, wherein the process is repeated until the actual position coincides with the target object location.

2. A method as claimed in Claim 1, **characterised in that** the desired direction of movement and the actual direction of movement are indicated with arrows (4, 5) of differing thickness.

3. A method as claimed in Claim 1 or 2, **characterised in that** the precise distance between the actual position and the target object location are indicated visually on an edge of the screen, preferably below or above one of the displays.

4. A method as claimed in Claim 1, **characterised in that** the distance from the target object location is shown.

5. A method as claimed in Claim 1, **characterised in that** when the actual position and the target object location coincide an optical and/or acoustic output occurs.

## Revendications

1. Procédé de repérage d'objets enterrés dont la présence a déjà été décelée au moyen d'appareils de recherche adéquats, et dont au moins la position géographique a été documentée au moyen d'un dispositif d'évaluation,
**caractérisé par le fait**
**que** les données de l'évaluation, effectuée par le dispositif d'évaluation, sont mémorisées dans un appareil manuel (1) à écran de visualisation (2), doté d'un système de localisation, ladite évaluation étant effectuée dans un dispositif d'évaluation séparé de l'appareil manuel (1), ou dans ledit appareil manuel (1),
**qu'**une liste des objets possibles est affichée sur l'écran de visualisation (2), en une première phase illustrative,
**qu'**après sélection d'un objet ciblé, il s'opère en une deuxième phase illustrative sur ledit écran de visualisation (2), sur la base d'un emplacement réel, l'affichage d'une direction de mouvement théorique (5) vers le site de l'objet ciblé correspondant à la position géographique dudit objet ciblé, et l'affichage additionnel de la direction de mouvement effective (4) après un mouvement dudit appareil manuel (1), et
**que** le site (7) dudit objet ciblé, ledit emplacement réel (9), et des repères d'éloignement (8) entre ledit emplacement réel et ledit site de l'objet ciblé, sont affichés sur ledit écran de visualisation (2) en une troisième phase illustrative, après qu'un éloignement préétabli par rapport audit site de l'objet ciblé a été atteint ;
sachant que des symboles (4 à 9) sont affichés lors desdites phases illustratives ;
lesdits repères d'éloignement sont affichés sous la forme d'anneaux concentriques (8), autour dudit site (7) de l'objet ciblé ;
après la sélection dudit objet ciblé, ledit emplacement réel est déterminé au moyen du système de localisation, la direction partant dudit emplacement réel et gagnant ledit site de l'objet ciblé est définie et est affichée en tant que direction de mouvement théorique, lors de la deuxième phase illustrative, ces opérations étant réitérées jusqu'à ce que ledit emplacement réel se soit modifié du fait du mouvement de l'utilisateur porteur de l'appareil manuel (1) ;
la direction de mouvement effective est définie sur la base de l'emplacement réel instantané et de l'emplacement réel précédent,
la direction de mouvement théorique est définie sur la base de l'emplacement réel et du site de l'objet ciblé,
ladite direction de mouvement effective et ladite direction de mouvement théorique sont affichées l'une en relation avec l'autre, sur l'écran de visualisation, l'opération se répétant jusqu'à ce que l'emplacement réel se trouve dans un cercle circonscrit préétabli, proche du site de l'objet ciblé ; et
l'emplacement réel et le site de l'objet ciblé sont affichés sous la forme d'une cible de visée, lors de la troisième étape illustrative, ledit site de l'objet ciblé étant reproduit au point de mire et ledit emplacement réel étant illustré au moyen d'un symbole, dans ladite cible de visée, l'opération étant réitérée jusqu'à ce que ledit emplacement réel coïncide avec ledit site de l'objet ciblé.

2. Procédé selon la revendication 1, **caractérisé par le fait que** la direction de mouvement théorique et la direction de mouvement effective sont affichées en tant que flèches (4, 5) d'épaisseurs différentes.

3. Procédé selon la revendication 1 ou 2, **caractérisé par le fait que** l'éloignement précis, entre l'emplacement réel et le site de l'objet ciblé, est affiché sous forme légendée sur un bord de l'écran de visualisation, de préférence au-dessous ou au-dessus de l'une des phases illustratives.

4. Procédé selon la revendication 1, **caractérisé par** l'affichage de l'éloignement par rapport au site de l'objet ciblé.

5. Procédé selon la revendication 1, **caractérisé par le fait qu'**une indication optique et/ou acoustique est émise en cas de coïncidence entre l'emplacement réel et le site de l'objet ciblé.
